# EUROPÄISCHE PATENTSCHRIFT

(11) **EP 3 105 113 B1**
(45) Veröffentlichungstag und Bekanntmachung des Hinweises auf die Patenterteilung: **28.03.2018**
(21) Anmeldenummer: 15705186.3
(22) Anmeldetag: 27.01.2015
(51) Int. Cl.: B62M 3/00, B62M 6/50

(54) **WELLE FÜR EIN FAHRRADTRETLAGER**
SHAFT FOR A BICYCLE BOTTOM BRACKET
ARBRE POUR PÉDALIER DE BICYCLETTE

(30) Priorität: 12.02.2014 DE 102014202483
(43) Veröffentlichungstag der Anmeldung: 21.12.2016
(73) Patentinhaber: Schaeffler Technologies AG & Co. KG, 91074 Herzogenaurach (DE)
(72) Erfinder: RABER, Hermann, 91475 Lonnerstadt (DE); NUISSL, Christian, 90763 Fürth (DE); BAUER, Jörg, 91056 Erlangen (DE); SCHOPLOCHER, Martin, 93413 Cham (DE)
(86) Internationale Anmeldenummer: PCT/DE2015/200035
(87) Internationale Veröffentlichungsnummer: WO 2015/120848

(56) Entgegenhaltungen:
- WO-A1-2012/136143
- DE-A1-102012 202 250
- US-A1- 2006 020 075

## Beschreibung

### Welle für ein Fahrradtretlager

Die Erfindung betrifft eine Welle für ein Fahrradtretlager mit zwei voneinander beabstandeten Radiallagern zum Lagern der Welle sowie ein Fahrrad aufweisend ein Fahrradtretlager.

### Hintergrund der Erfindung

Aus dem vorbekannten Stand der Technik ist bekannt, ein Fahrradtretlager mit einer Welle zu versehen, insbesondere mit einer Vollmaterialwelle, die mittels zweier Wälzlager in dem Fahrradtretlager gegen strukturelle Teile dieses Fahrradtretlagers gelagert und abgestützt ist. Die Welle überträgt dabei Drehmomente.
Diese Drehmomente wirken infolge von Pedalkräften, die auf die Pedale des Fahrrads aufgebracht werden.

Ausgehend von der Aufgabe, ein kostengünstiges und für Serienfertigung optimiertes Fahrradtretlager bereitzustellen, das einen einfachen Aufbau aufweist, offenbart die Druckschrift DE 10 2008 029 088 A1 beispielsweise eine Tretlagereinheit, insbesondere für ein Fahrrad, umfassend zwei axial beabstandete Wälzlager, wobei beide Wälzlager einen gemeinsamen, rohrförmigen Aussenring aufweisen.
Die WO 2013/132535 A1 offenbart ein elektrisches Fahrrad mit einem Drehmomentsensor im Bereich der Tretlagereinheit. Die DE 10 2012 202250 A1 offenbart die Präambel des Anspruchs 1. Bekannt sind auch sogenannte kompakte Sensor-Tretlager, die zwei axial beabstandete, eine gemeinsame Tretlagerwelle umgebende, Wälzlager vorsehen, in deren Zwischenraum ein Signalgeber, beispielsweise ein metallischer Encoderring, aufgebracht ist, vergleiche URL:
http://www.schaeffler.com/remotemedien/media/_shared_media/04_sectors/02_indust ry/bicycles_and_sports_equipment/0001A6C6.jpg.

Diese sind für die Messung von Drehzahl-, Drehrichtung und Drehwinkel vorgesehen. Ohne aufwändige Nachbearbeitung der Tretlagerwelle eines solchen Sensor-Tretlagers kann der die Tretlagerwelle umgebende Encoderring des Sensor-Tretlagers axial verrutschen. Als Folge kann das Messsignal an dem mit dem Encoderring korrespondierenden Messwertaufnehmer nicht mehr ankommen. Der Verlust des Messignales würde den Verlust der Drehzahl-, Drehrichtungs- oder Drehwinkelinformation bedeuten und die funktionelle Aufgabe dieses Sensor-Tretlagers ad absurdum führen.

In der Praxis wird dieses axiale Verrutschen bislang dadurch verhindert, dass die Tretlagerwelle aufwändig fertigungstechnisch nachbearbeitet wird: Es erfolgen Fertigungsschritte des Nachschleifens und des Oberflächenglättens der Tretlagerwelle, um den Aussendurchmesser der Tretlagerwelle derart an den Innendurchmesser des Encoderrings anzupassen, dass eine Presspassung zwischen Encoderring und Tretlagerwelle erreicht wird. Durch diese Passung kann der Encoderring positionsgenau und axial unverrutschbar auf der Tretlagerwelle positioniert werden.

Eben diese aufwändige fertigungstechnische Nachbearbeitung führt in der Praxis jedoch zu hohen Mehrkosten.

### Aufgabe der Erfindung

Basierend auf dem vorgenannten Stand der Technik soll eine Welle für ein Fahrradtretlager weitergebildet werden, auf die in einfacher und kostengünstiger Weise ein Messwertgeber zur genauen Übermittlung dynamischer Parameter der Welle aufgebracht werden kann. Weiterhin soll ein Fahrrad mit einer solchen Welle angegeben werden.

### Beschreibung der Erfindung

Erfindungsgemäß wird diese Aufgabe durch eine Welle für ein Fahrradtretlager gemäß Anspruch 1 und ein Fahrrad gemäß Anspruch 7 gelöst. Vorteilhafte Ausgestaltungen der Erfindung sind den abhängigen Patentansprüchen zu entnehmen. Die erfindungsgemäße Welle für ein Fahrradtretlager weist zwei voneinander axial beabstandete Radiallager zum Lagern der Welle auf, und ist gekennzeichnet durch ein axial zwischen den Radiallagern auf der Welle angeordnetes Sicherungselement, wobei das Sicherungselement aus mindestens zwei Teilen gebildet ist. An diesem Sicherungselement ist ein Messwertgeber angeordnet. Die beiden Teile des Sicherungselementes sind jeweils durch wenigstens einen Formschluss mit der Welle gegen axiales Verschieben gesichert und derart mit der Welle gekoppelt, dass der Messwertgeber in axialer Richtung zwischen den beiden Teilen angeordnet ist und seine axiale Position durch die beiden Teile axial begrenzt ist.

Die Funktion des Messwertgebers ist es, dynamische Parameter der Welle an eine Erfassungseinheit zu übermitteln. Diese Übermittlung kann dabei beispielsweise auf magnetischem, induktivem, kapazitivem oder optischem Wege erfolgen. Beispielsweise ist die Information über die Drehzahl der Welle ein solcher dynamischer Parameter.

Unter der axialen Begrenzung ist zu verstehen, dass die axiale Position des Messwertgebers entweder gar nicht verändert werden kann, oder aber alternativ nur in einem so geringfügigen Maße verschoben werden kann, dass die Funktion des Messwertgebers gegenüber dem Sensor trotz einer etwaigen geringfügigen Verschiebung beibehalten wird.

Durch diese erfindungsgemäße Anordnung wird vorteilhafterweise erreicht, dass der Messwertgeber zur Übermittlung des Bewegungszustandes auf der Welle aufgebracht werden kann, ohne dass eine vorherige kostenintensive Nachbearbeitung der Welle nötig ist. Dies spart in der fertigungstechnischen Praxis Zeit und Kosten.

In einer vorteilhaften Ausgestaltung weist die Welle jeweils eine Ringnut axial benachbart zu jeweils einem der Radiallager auf, wobei die beiden Teile des Sicherungselementes mindestens je einen Ringzapfen aufweisen, der jeweils formschlüssig mit der jeweils einen Ringnut gefügt ist. Der Ringzapfen kann vorteilhafterweise mehrfach am Umfang geschlitzt sein und damit federnd ausgeführt werden. Dadurch ist es möglich, dass sich der Ringzapfen mit seinem Zapfen in die Ringnut der Welle einfügt.
Unter der Fügung ist dabei der Formschluss des Ringzapfens, der beispielsweise als eine Materialausbuchtung an dem Sicherungselement geformt ist, mit in der dafür vorgesehenen Ringnut in der Welle zu verstehen.

Daraus resultiert der Vorteil, dass das Sicherungselement gegenüber der Welle axial unverrutschbar ist. Da der vorgenannte Messwertgeber durch das Sicherungselement in seiner axialen Verschiebung begrenzt ist, kann folglich dann auch der Messwertgeber gegenüber der Welle nur in engen Grenzen verrutschbar sein.

In einer weiteren vorteilhaften Ausgestaltung ist das erste Radiallager an eine erste Stirnseite des ersten Teiles des Sicherungselementes angelegt und das zweite Radiallager ist in gleicher Weise an eine zweite, der ersten Stirnseite gegenüberliegenden, Stirnseite des zweiten Teiles des Sicherungselementes angelegt.
Dadurch bietet sich der Vorteil, dass zur Wellenmitte hin orientierte Wellen-Sicherungsringe zur Sicherung der Radiallager, die obligatorisch wären, wenn das Sicherungselement nicht zwischen den Radiallagern angeordnet wäre, eingespart werden können.

In einer weiteren vorteilhaften Ausgestaltung besteht das Sicherungselement als Ganzes aus Polymerkunststoff oder eines seiner Teile ist aus Polymerkunststoff gefertigt, insbesondere aus Polyamid PA66 mit oder ohne Glasfaseranteil. Der Polymerwerkstoff kann glasfaserverstärkt sein.
Ein Vorteil des Polymerkunststoffes ist, dass das Trägerelement so als Spritzgußteil ausgeführt werden kann, dass es axial entformt werden kann und kostengünstig hergestellt werden kann.
Vorteil dieser Ausgestaltung aus einem Polymerkunststoff ist die Leichtbaueigenschaft des Kunststoffs, insbesondere des Polyamids. Herkömmliche Wellensicherungsmittel bestehen in der Regel aus Metall. Die Welle besteht beispielsweise ebenso aus Metall, insbesondere aus Stahl. Im Vergleich zu herkömmlichen Wellensicherungsmitteln sorgt die Leichtbaueigenschaft des Polymerkunststoff-Sicherungselementes für ein im Verhältnis zur Welle vernachlässigbares Gewicht des Sicherungselementes. Außerdem ist das Sicherungselement aus Polymerkunststoff günstiger herzustellen als beispielsweise ein metallisches Sicherungselement.

In einer weiteren vorteilhaften Ausgestaltung weist jedes Teil des Sicherungselementes mindestens einen Anschlag auf, insbesondere in Ausgestaltung eines Ringbundes, an dem der Messwertgeber axial angelegt werden kann. Durch einen solchen axialen Anschlag, insbesondere in Form des Ringbundes, kann der Messwertgeber gegenüber dem Sicherungselement axial unverrutschbar befestigt werden.

In einer weiteren vorteilhaften Ausgestaltung ist das Sicherungselement hohlzylindrisch ausgeführt und umschließt die Welle koaxial zumindest in einem Teilbereich und sitzt drehfest auf der Welle. Der Messwertgeber kann zwischen den beiden Teilen des Sicherungselementes durch flächige Anlehnung an die beiden Teile in axialer Richtung eingeklemmt sein.

Dadurch bietet sich der Vorteil, dass der spiellos eingeklemmte Messwertgeber von beiden Seiten der Einklemmung praktisch axial gehalten wird, und durch diese Einklemmung drehfest mit dem Sicherungselement gekoppelt ist. Wenn das Sicherungselement, wie vorgenannt, drehfest auf der Welle sitzt, ist auch der spiellos eingeklemmte Messwertgeber sowohl gegenüber dem Sicherungselement, als auch gegenüber der Welle, drehfest gekoppelt und kann bei bestimmungsgemäßem Gebrauch nicht umfangsseitig verdreht werden. Dieser Vorteil stellt sich selbst dann ein, wenn zwischen dem Messwertgeber und der Welle ein ringförmiger Zwischenraum verbliebe.

Der Messwertgeber kann mittig zwischen den beiden Sicherungselementen sitzen, wodurch vorteilhafterweise zwei baugleiche Sicherungselemente eingesetzt werden können.

Die Erfindung betrifft auch ein Fahrrad, beispielsweise ein Elektrofahrrad, insbesondere ein Pedelec, aufweisend ein Fahrradtretlager und die erfindungsgemäße Welle, wobei der Messwertgeber zur Übermittlung eines Bewegungszustandes der Welle ausgeführt ist. Der Bewegungszustand ist beispielsweise die Wellen-Drehzahl. Das Fahrradtretlager weist einen mit dem Messwertgeber berührungslos und radial über einen Luftspalt zusammenwirkenden Sensor zur Aufnahme des Bewegungszustandes auf. Der Sensor fluchte mit dem Messwertgeber radial.

Durch eine Anordnung der erfindungsgemäßen Welle in einem Fahrradtretlager dieses Fahrrads wird ermöglicht, dass unter Anderem die Wellen-Drehzahl der Welle übermittelt und ausgewertet werden kann.
Durch das radiale Fluchten wird erreicht, dass Messwertgeber und Sensor stets in radialer Richtung in Wirkzusammenhang stehen und es wird vorteilhafterweise verhindert, dass infolge axialer Verschiebung des Messwertgebers gegenüber dem Sensor die Information über den Bewegungszustand der Welle verloren gehen kann.

### Kurze Beschreibung der Zeichnungen

Nachfolgend werden einige Ausführungsbeispiele der Erfindung unter Bezugnahme auf Figuren näher beschrieben. Dabei zeigen:
- Fig. 1: ein Fahrradtretlager mit einem zweiteiligen Sicherungselement, dargestellt in einem schematischen Vollschnitt;
- Fig. 2: ein an das in Fig. 1 dargestellte Fahrradtretlager angelehntes Ausführungsbeispiel eines Fahrradtretlagers in einem Vollschnitt;
- Fig. 3: einen Teil des zweiteiligen Sicherungselementes aus Fig. 2, dargestellt in einem Vollschnitt;
- Fig. 4: den einen Teil des zweiteiligen Sicherungselementes aus Fig. 3, dargestellt in einer Perspektive;

### Detaillierte Beschreibung der Zeichnungen

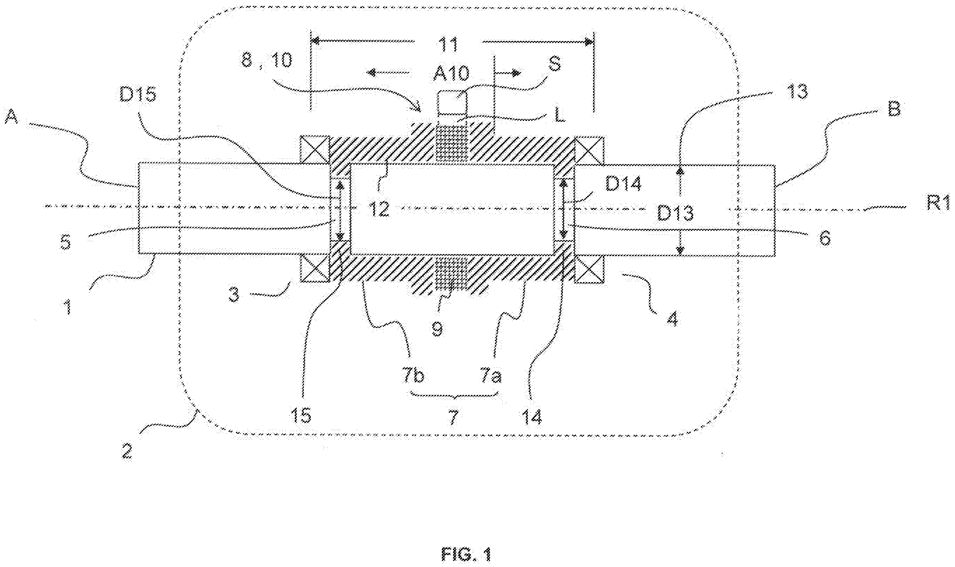

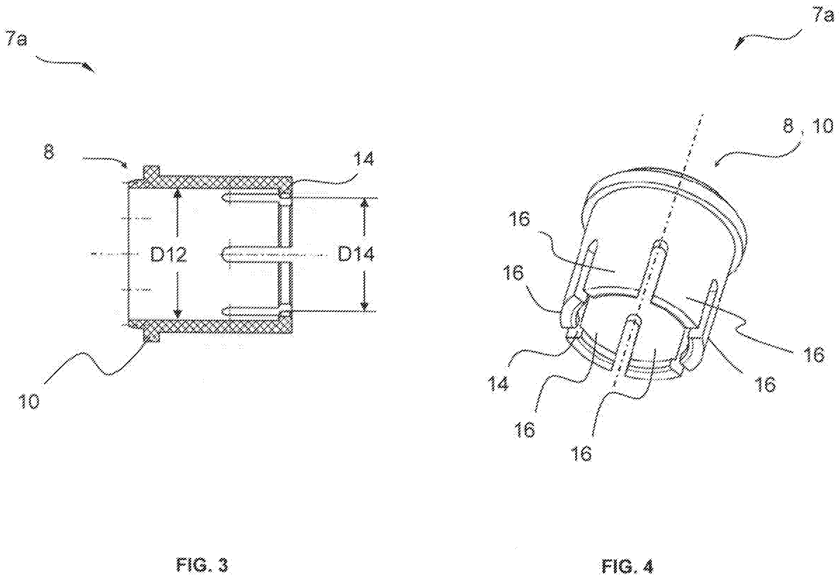

Fig. 1 zeigt ein Fahrradtretlager 2 mit einem zweiteiligem Sicherungselement 7, dargestellt in einem schematischen Vollschnitt, wie folgt:
Das Fahrradtretlager 2 weist eine Welle 1 mit zwei voneinander axial beabstandeten Radiallagern 3, 4 auf. Die Welle 1 weist zwei Wellenenden A, B, einen Außenmantel 13, einen Außenmanteldurchmesser D13 und eine Rotationsachse R1 auf. Zwischen den Wellenenden A, B ist ein Mittenbereich 11 gegeben, der von zwei Radiallagern 3, 4 begrenzt wird. Axial zwischen den Radiallagern 3, 4 ist auf der Welle das Sicherungselement 7, bestehend aus den beiden Teilen 7a und 7b, angeordnet. Das Sicherungselement 7 weist einen Innenmantel 12 und ein Mittel zur Aufnahme 8 eines Messwertgebers 9 auf. Dieses Mittel zur Aufnahme 8 umfasst einen axialen Anschlag 10, der sich jeweils ringförmig um die ringförmige Außenkontur der Teile 7a, 7b erstreckt. Axial zwischen den beiden Teilen 7a, 7b des Sicherungselementes ist der Messwertgeber 9 in Form eines Encoderrings befestigt. Der Encoderring weist entlang seines Umfangs Segmente alternierender magnetischer Polarität auf. Der Encoderring arbeitet nach einem magnetischen Wirkprinzip wie folgt: Durch Zusammenwirken des Encoderrings mit dem radial direkt benachbarten und durch einen Luftspalt L beabstandeten Hallsensor S wird die periodische Änderung des Magnetfeldes, die sich durch die segmentweise abwechselnden Nord-Polaritäten und Süd-Polaritäten ergibt, im Luftspalt L erfasst. Diese Änderung ist proportional zur Drehgeschwindigkeit der Welle 1 und kann datentechnisch weitergeleitet und verarbeitet werden. Axial endseitig der Teile 7a, 7b sind Ringzapfen 14, 15 ausgebildet. Ein Öffnungsdurchmesser D14 des Teils 7a ist gegenüber einem Innendurchmesser D12 (vergleiche Fig. 3) des Innenmantels 12 des Teils 7a verringert. Ein Öffnungsdurchmesser D15 des zu Teil 7a baugleichen Teils 7b ist gegenüber dem Innendurchmesser D12 des Innenmantels 12 ebenfalls verringert. Die beiden Teile 7a und 7b sind durch einen Formschluss der Ringzapfen 14, 15 mit der Welle 1 gegen axiales Verschieben A10 gesichert. In die Welle 1 sind zu diesem Zweck zwei Ringnuten 5, 6 axial benachbart zu den Radiallagern 3, 4 eingebracht. Diese Ringnuten 5, 6 werden bei Formschluss umfangsseitig von Ringzapfen 14, 15 ausgefüllt. Diese Ringzapfen sind in die Teile 7a, 7b des Sicherungselementes 7 eingearbeitet und in die Ringnuten 5, 6 eingefügt. Die beiden Teile 7a, 7b des Sicherungselementes 7 sitzen folglich gegenüber der Welle 1 axial unverrutschbar auf. Zwischen den Teilen 7a, 7b ist der Encoderring derart eingepasst, dass er gegenüber der Welle axial unverrutschbar gesichert ist.

Das erste Radiallager 3 kann direkt an der Stirnseite des Teiles 7b abgestützt oder flächig angelehnt sein (in Fig. 1 nicht dargestellt) und das zweite Radiallager 4 kann direkt an der Stirnseite des gegenüberliegenden Teiles 7a abgestützt oder flächig angelehnt sein (in Fig. 1 nicht dargestellt).

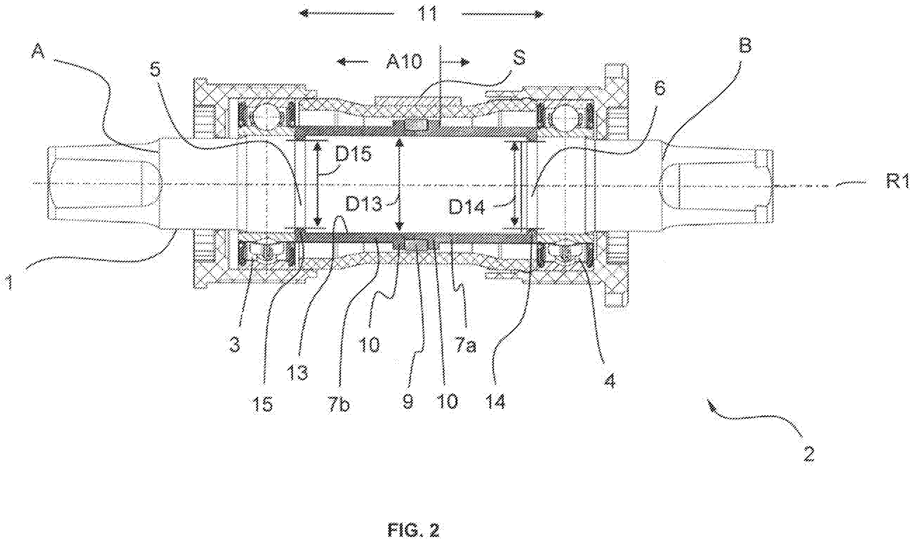

Fig. 2 zeigt ein an das in Fig. 1 dargestellte Fahrradtretlager angelehntes Ausführungsbeispiel eines Fahrradtretlagers in einem Vollschnitt. Gleiche Bezugszeichen wie in Fig. 1 kennzeichnen gleiche Elemente.

Kernelement des Fahrradtretlagers 2 ist auch hier die Welle 1, die im bestimmungsgemäßen Betrieb um die Rotationsachse R1 rotiert. Die Welle 1 weist zwei Wellenenden A, B auf. Zwischen den Wellenenden ist ein Mittenbereich 11 gegeben, der von zwei axial beabstandeten Radiallagern 3, 4 in Form von Kugellagern begrenzt wird. Zwischen den Radiallagern 3, 4 ist das aus zwei Teilen 7a, 7b gebildete Sicherungselement 7 angeordnet, wobei diese Teile 7a, 7b baugleich ausgeführt sind. Zwischen den baugleichen Teilen 7a, 7b ist erneut ein Messwertgeber 9 in Form eines Encoderrings angeordnet, insbesondere axial eingeklemmt, und infolge dieser Einklemmung gegen eine mögliche axiale Verschiebung A10 gesichert.

Der Encoderring ist ringförmig ausgebildet und umschliesst die Welle 1 umfangsseitig. Im Gegensatz zu Fig. 1 ist in Fig. 2 der Encoderring durch einen dünnwandigen Materialsteg, der durch die beiden Teile 7a, 7b radial unterhalb des Encoderrings gebildet ist, von der Welle 1 radial beabstandet. Zwischen den Enden der Materialstege ist ein feiner Spalt ausgebildet. Die beiden Teile 7a, 7b sind als Spritzgußteil aus Kunststoff hergestellt und hohlzylindrisch ausgeführt, sodass sie die Welle 1 ringförmig umgeben können und die Welle 1 ringförmig mechanisch kontaktieren. Der vorgenannte Materialsteg ist dabei als eine Verdünnung der Wandstärke der hohlzylindrischen Teile 7a, 7b ausgeführt. Beide Teile 7a, 7b weisen den gleichen Innenmantel 12 und an einem axialen Ende ihrer hohlzylindrischen Form jeweils den Ringzapfen 14, 15 auf. Der Innendurchmesser D12 des Innenmantels 12 ist jeweils so auf den Aussendurchmesser D13 der Welle 1 abgestimmt, dass während der Montage des Fahrradtretlagers 2 zwar ein axiales Aufschieben der Teile 7a, 7b des Sicherungselementes auf die Welle 1 möglich ist, auf der anderen Seite jedoch eine Verdrehung der Teile 7a, 7b gegenüber der Welle 1 während der bestimmungsgemäßen Anwendung des Fahrradtretlagers 2 nicht erfolgt.

Fig. 3 zeigt das Teil 7a des zweiteiligen Sicherungselementes 7 aus Fig. 2, dargestellt in einem Vollschnitt. Gleiche Bezugszeichen wie in Fig. 2 kennzeichnen gleiche Elemente.

Das Teil 7a weist, wie in Fig. 1 und Fig. 2, ein Mittel zur Aufnahme 8 eines Messwertgebers (nicht dargestellt) auf. Dieses Mittel zur Aufnahme 8 umfasst einen axialen Anschlag 10, der sich ringförmig um die ringförmige Außenkontur des Teil 7a erstreckt. Axial endseitig des Teils 7a ist ein Ringzapfen 14 ausgebildet. Der Öffnungsdurchmesser D14 des Teils 7a an diesem axialen Ende ist gegenüber dem Innendurchmesser D12 des Innenmantels 12 des Teils 7a verringert. Durch diese Verringerung des Durchmessers wird der Formschluss des Ringzapfens 14 mit der Welle 1 (nicht dargestellt) gewährleistet.

Fig. 4 zeigt, ebenso wie Fig. 3, das Teil 7a des zweiteiligen Sicherungselementes 7 aus Fig. 3 nun in einer perspektivischen Darstellung.

Axial endseitig sind mehrere gleichförmige Federzungen 16 abgebildet. Hier sind beispielhaft sechs Federzungen 16 abgebildet. Diese Federzungen 16 unterstützen den Formschluss des Ringzapfens 14 mit der Welle 1, dadurch, dass sie eine geringförmige elastische endseitige Verformung des Teils 7a in radialer Richtung zulassen.

### Bezugszeichenliste

- 1: Welle
- 2: Fahrradtretlager
- 3: Radiallager (z.B. Kugellager)
- 4: Radiallager (z.B. Kugellager)
- 5: Ringnut
- 6: Ringnut
- 7a: Sicherungselement-Teil
- 7b: Sicherungselement-Teil
- 7: Sicherungselement
- 8: Mittel zur Aufnahme
- 9: Messwertgeber (z.B. Encoderring)
- 10: Anschlag
- 11: Mittenbereich
- 12: Innenmantel
- 13: Außenmantel
- 14: Ringzapfen
- 15: Ringzapfen
- 16: Federzunge
- D12: Innendurchmesser
- D13: Außendurchmesser
- D14: Öffnungsdurchmesser
- D15: Öffnungsdurchmesser
- A10: Verschiebung (axial)
- R1: Rotationsachse
- S: Sensor
- A: Wellenende
- B: Wellenende
- L: Luftspalt

## Patentansprüche

1. Welle (1) für ein Fahrradtretlager (2) mit
zwei voneinander axial beabstandeten Radiallagern (3, 4) zum Lagern der Welle (1)
**gekennzeichnet durch**
- ein axial zwischen den Radiallagern (3, 4) auf der Welle (1) angeordnetes Sicherungselement (7) umfassend mindestens zwei Teile (7a, 7b),
- einen an diesem Sicherungselement (7) angeordneten Messwertgeber (9),
- wobei die beiden Teile (7a, 7b) jeweils durch wenigstens einen Formschluss mit der Welle (1) gegen axiales Verschieben (A10) gesichert sind und derart mit der Welle (1) gekoppelt sind, dass
der Messwertgeber (9) in axialer Richtung zwischen den beiden Teilen (7a, 7b) angeordnet ist und seine axiale Position durch die beiden Teile (7a, 7b) begrenzt ist.

2. Welle (1) nach Anspruch 1,
- wobei die Welle (1) jeweils eine Ringnut (5 ,6) axial benachbart zu jeweils einem der Radiallager (3, 4) aufweist, und
- wobei die beiden Teile (7a, 7b) des Sicherungselementes (7) mindestens je einen Ringzapfen (14, 15) aufweisen, der jeweils formschlüssig mit der jeweils einen Ringnut (5, 6) gefügt ist.

3. Welle (1) nach einem der Ansprüche 1 oder 2,
wobei das erste Radiallager (3) an eine erste Stirnseite des ersten Teiles (7b) des Sicherungselementes (7) angelegt ist und das zweite Radiallager (4) an eine zweite, der ersten Stirnseite gegenüberliegenden, Stirnseite des zweiten Teiles (7a) des Sicherungselementes (7) angelegt ist.

4. Welle (1) nach wenigstens einem der vorgenannten Ansprüche,
wobei das Sicherungselement (7) aus Polyamid, beispielsweise mit Glasfaseranteil, ausgeführt ist.

5. Welle (1) nach wenigstens einem der vorgenannten Ansprüche,
wobei jedes Teil (7a , 7b) des Sicherungselement (7) mindestens einen Anschlag (10) aufweist, an dem der Messwertgeber (9) axial angelegt ist.

6. Welle (1) nach wenigstens einem der vorgenannten Ansprüche,
wobei das Sicherungselement (7) hohlzylindrisch ausgeführt ist,
die Welle (1) koaxial zumindest teilweise umschließt und drehfest auf der Welle (1) sitzt und der Messwertgeber (9) zwischen den beiden Teilen (7a, 7b) des Sicherungselementes (7) durch flächige Anlehnung an die beiden Teile (7a, 7b) in axialer Richtung eingeklemmt ist.

7. Fahrrad, beispielsweise Elektrofahrrad, insbesondere Pedelec, aufweisend ein Fahrradtretlager (2) und eine Welle (1) nach einem der vorhergehenden Ansprüche, wobei der Messwertgeber (9) zur Übermittlung eines Bewegungszustandes der Welle (1) ausgeführt ist, das Fahrradtretlager (2) einen mit dem Messwertgeber (9) berührungslos und radial über einen Luftspalt (L) zusammenwirkenden Sensor (S) zur Aufnahme des Bewegungszustandes aufweist und der Sensor (S) mit dem Messwertgeber (9) radial fluchtet.

## Claims

1. Shaft (1) for a bicycle pedal bearing (2) having two radial bearings (3, 4) which are spaced apart from one another axially for mounting the shaft (1), **characterized by**
- a securing element (7) which is arranged axially between the radial bearings (3, 4) on the shaft (1) and comprises at least two parts (7a, 7b),
- a measuring transducer (9) which is arranged on the said securing element (7),
- the two parts (7a, 7b) being secured against axial displacement (A10) in each case by way of at least one positively locking connection to the shaft (1), and being coupled to the shaft (1) in such a way that
the measuring transducer (9) is arranged between the two parts (7a, 7b) in the axial direction, and its axial position is limited by way of the two parts (7a, 7b).

2. Shaft (1) according to Claim 1,
- the shaft (1) having in each case one annular groove (5, 6) axially adjacently with respect to in each case one of the radial bearings (3, 4), and
- the two parts (7a, 7b) of the securing element (7) having at least in each case one annular journal (14, 15) which is joined in each case in an integrally joined manner to the in each case one annular groove (5, 6).

3. Shaft (1) according to either of Claims 1 and 2, the first radial bearing (3) being placed onto a first end side of the first part (7b) of the securing element (7), and the second radial bearing (4) being placed onto a second end side of the second part (7a) of the securing element (7), which second end side lies opposite the first end side.

4. Shaft (1) according to at least one of the preceding claims,
the securing element (7) being configured from polyamide, for example with a glass fibre content.

5. Shaft (1) according to at least one of the preceding claims,
each part (7a, 7b) of the securing element (7) having at least one stop (10), against which the measuring transducer (9) is placed axially.

6. Shaft (1) according to at least one of the preceding claims,
the securing element (7) being of hollow-cylindrical configuration,
coaxially enclosing the shaft (1) at least partially and being seated fixedly on the shaft (1) so as to rotate with it, and the measuring transducer (9) being clamped in between the two parts (7a, 7b) of the securing element (7) in the axial direction by way of leaning flatly against the two parts (7a, 7b).

7. Bicycle, for example electric bicycle, in particular pedelec, having a bicycle pedal bearing (2) and a shaft (1) according to one of the preceding claims, the measuring transducer (9) being configured to transmit a movement state of the shaft (1), the bicycle pedal bearing (2) having a sensor (S) for recording the movement state, which sensor (S) interacts with the measuring transducer (9) contactlessly and radially via an air gap (L), and the sensor (S) being aligned radially with the measuring transducer (9).

## Revendications

1. Arbre (1) pour pédalier (2) de bicyclette, présentant
deux paliers radiaux (3, 4) disposés à distance axiale mutuelle, pour monter l'arbre (1),
**caractérisé par**
un élément de blocage (7) comprenant au moins deux parties (7a, 7b) et disposé sur l'arbre (1) axialement entre les paliers radiaux (3, 4),
un émetteur (9) de valeurs de mesure disposé sur cet élément de blocage (7),
chacune des deux parties (7a, 7b) étant empêchée de se déplacer axialement (A10) par au moins une correspondance géométrique avec l'arbre (1) et étant ainsi accouplée à l'arbre (1) de telle sorte que
l'émetteur (9) de valeurs de mesure soit disposé dans la direction axiale entre les deux parties (7a, 7b) et que sa position axiale soit limitée par les deux parties (7a, 7b).

2. Arbre (1) selon la revendication 1, dans lequel l'arbre (1) présente une rainure annulaire (5, 6) disposée axialement au voisinage de l'un des paliers radiaux (3, 4) et
les deux parties (7a, 7b) de l'élément de blocage (7) présentent chacune au moins un tourillon annulaire (14, 15) inséré en correspondance géométrique dans la ou les rainures annulaires (5, 6).

3. Arbre (1) selon l'une des revendications 1 ou 2, dans lequel le premier palier radial (3) est placé sur un premier côté frontal de la première partie (7b) de l'élément de blocage (7) et le deuxième palier radial (4) est placé sur un deuxième côté frontal, opposé au premier côté frontal, de la deuxième partie (7a) de l'élément de blocage (7).

4. Arbre (1) selon au moins l'une des revendications précédentes, dans lequel l'élément de blocage (7) est réalisé en polyamide, de préférence additionné de fibres de verre.

5. Arbre (1) selon au moins l'une des revendications précédentes, dans lequel chaque partie (7a, 7b) de l'élément de blocage (7) présente au moins une butée (10) sur laquelle l'émetteur (9) de valeurs de mesure est appliqué axialement.

6. Arbre (1) selon au moins l'une des revendications précédentes, dans lequel l'élément de blocage (7) a la forme d'un cylindre creux qui entoure l'arbre (1) au moins en partie et repose à rotation solidaire sur l'arbre (1), l'émetteur (9) de valeurs de mesure étant bloqué dans la direction axiale entre les deux parties (7a, 7b) de l'élément de blocage (7) en reposant à plat contre les deux parties (7a, 7b).

7. Bicyclette, par exemple bicyclette électrique, en particulier bicyclette dite "Pedelec", présentant un pédalier (2) de bicyclette et un arbre (1) selon l'une des revendications précédentes, l'émetteur (9) de valeurs de mesure étant conçu pour transmettre l'état de déplacement de l'arbre (1), le pédalier (2) de bicyclette présentant un capteur (S) d'enregistrement de l'état de déplacement qui coopère sans contact avec l'émetteur (9) de valeurs de mesure et radialement par l'intermédiaire d'un entrefer (L), le capteur (S) étant aligné radialement sur l'émetteur (9) de valeurs de mesure.
